# FASCICULE DE BREVET EUROPEEN

(11) **EP 1 956 226 B1**
(45) Date de publication et mention de la délivrance du brevet: **19.08.2009**
(21) Numéro de dépôt: 08101436.7
(22) Date de dépôt: 08.02.2008
(51) Int. Cl.: F02K 3/075, F02C 9/18, F04D 27/02

(54) **Dispositif de décharge pour un turboréacteur, et turboréacteur le comportant**
Entladevorrichtung für Turbostrahltriebwerk und damit ausgestattetes Turbostrahltriebwerk
Discharge device for a jet engine, and jet engine comprising same

(30) Priorité: 12.02.2007 FR 0701000
(43) Date de publication de la demande: 13.08.2008
(73) Titulaire: SNECMA, 75015 Paris (FR)
(72) Inventeur: Albert, Brice, 31270, Cugnaux (FR); Marlin, François, 77760, Villiers sous Grez (FR); Servant, Régis, 91270, Vigneux sur Seine (FR)
(74) Mandataire: David, Daniel

(56) Documents cités:
- EP-A- 0 511 770
- EP-A- 1 531 236
- EP-A1- 0 174 255
- EP-A1- 1 249 618
- EP-A1- 1 308 601
- US-A- 5 279 109

## Description

La présente invention concerne le domaine des turboréacteurs d'aviation double flux.

Elle se rapporte plus précisément à un turboréacteur équipé d'un dispositif de décharge.

De manière connue, un turboréacteur double flux d'un aéronef comporte une veine primaire d'écoulement des gaz et une veine secondaire d'écoulement des gaz, qui sont séparées par un carter intermédiaire qui est une pièce structurale. Dans la veine primaire sont disposés, d'amont en aval dans le sens d'écoulement des gaz, un compresseur à basse pression et un compresseur à haute pression. L'air ainsi comprimé est amené à une chambre de combustion dans laquelle il est mélangé à du carburant sous pression qui est brûlé pour fournir, en aval de la chambre de combustion, de l'énergie à une turbine à haute pression qui entraîne le compresseur à haute pression, puis à une turbine à basse pression qui entraîne la soufflante le compresseur à basse pression. Les gaz en sortie des turbines fournissent une poussée résiduelle qui s'ajoute à la poussée générée par les gaz circulant dans la veine secondaire afin d'assurer la propulsion de l'aéronef.

Dans certaines conditions de vol, la quantité d'air délivrée par le compresseur à basse pression est trop élevée pour garantir un fonctionnement correct du turboréacteur, aussi est-il nécessaire de dériver une partie de cet air vers la veine secondaire, afin d'éviter l'apparition du phénomène dit de pompage, qui est dû au décollement des filets fluides le long des aubes et qui provoque une instabilité de l'écoulement.

La dérivation d'air est encore appelée décharge d'air. Elle est effectuée au moyen d'un dispositif de décharge.

Un dispositif de décharge bien connu met en oeuvre des volets mobiles articulés et actionnés simultanément par un ensemble de moyens d'actionnement. Un tel dispositif de décharge à volets est décrit dans le document US 3 638 428. Un exemple de dispositif de décharge à volets est représenté sur la figure 10, qui montre la veine d'écoulement primaire 110 dans laquelle est disposé le compresseur à basse pression 112 et la veine d'écoulement secondaire 114 qui entoure la veine d'écoulement primaire 110. Les deux veines 110, 114 sont annulaires et sont séparées par un compartiment interveine 117 se présentant sous la forme d'un compartiment annulaire ayant une enveloppe intérieure 116 et une enveloppe extérieure 118. Un carter intermédiaire 120, qui est une pièce structurale, s'étend sur une section du turboréacteur, et relie l'enveloppe intérieure 116 et l'enveloppe extérieure 118. Le carter intermédiaire 120 comporte des bras supports 122 qui s'étendent radialement à partir de l'enveloppe extérieure 118 à l'intérieur de la veine secondaire 114. Ces bras support 122 permettent le passage des efforts du moteur vers la structure de l'avion. Ils sont généralement présents au nombre de huit à douze.

En amont des bras supports 122, la veine intérieure 114 contient aussi des aubages redresseurs 124 qui s'étendent radialement à partir de l'enveloppe extérieure 118 et ont pour fonction de redresser l'écoulement d'air après son passage à travers des aubes d'une soufflante (non représentée à la figure).

L'écoulement dans la veine primaire 110 est représenté par les flèches 190. L'écoulement dans la veine secondaire 114 est représenté par les flèches 192. La décharge ou dérivation d'air de la veine primaire 110 vers la veine secondaire 114 est représentée par les flèches 194. Cette décharge s'effectue au travers d'ouvertures intérieures 126 de l'enveloppe intérieure 116 et d'ouvertures extérieures 128 de l'enveloppe extérieure 118, au moyen de volets mobiles 130 disposés dans le compartiment interveine 117, entre l'enveloppe intérieure 116 et l'enveloppe extérieure 118. Les volets mobiles 130 sont actionnés par des vérins 164 de manière à pouvoir obturer de manière synchrone les ouvertures intérieures 126. Les ouvertures extérieures 128 ne sont pas obturées. Elles se présentent sous forme de grilles réparties sur la circonférence de l'enveloppe extérieure 118 et positionnées au niveau du carter intermédiaire entre les bras supports 122.

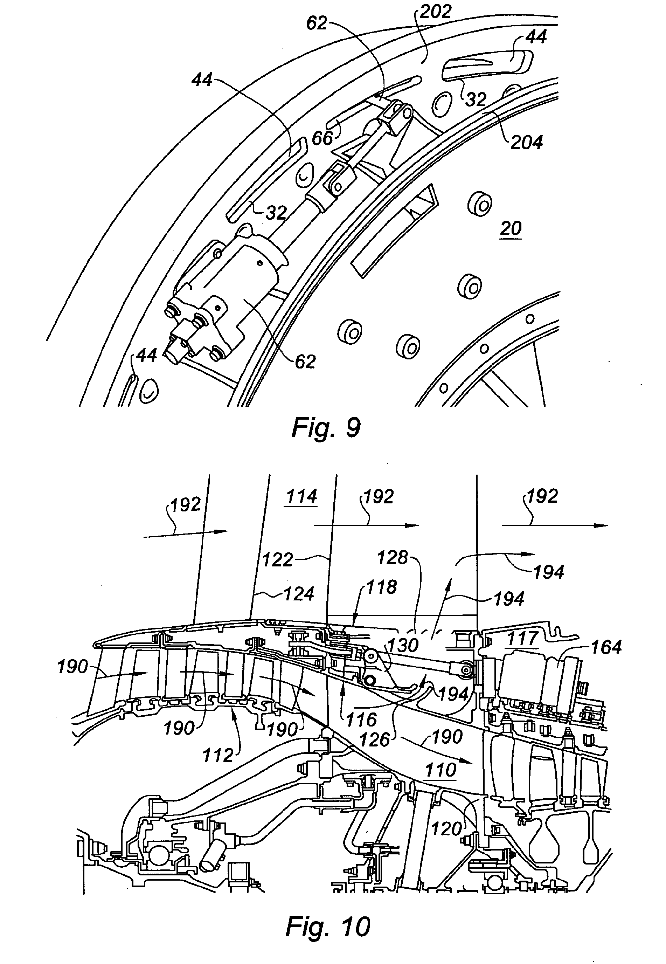

Le dispositif de décharge de la technique antérieure qui vient d'être décrit en référence à la figure 10 n'est pas adapté aux conceptions récentes de turboréacteurs d'aviation, qui tendent de plus en plus à réduire la masse et l'encombrement des turboréacteurs. On cherche à cet effet à raccourcir la dimension axiale des turboréacteurs, et il a été proposé de placer les aubages redresseurs sur la même section axiale du carter intermédiaire que les bras supports, et même de conférer à ces bras supports un profil redresseur. Par exemple, on rencontre sur le carter intermédiaire des bras supports entre lesquels sont répartis les aubages redresseurs. Par suite, il n'y a plus de place sur cette section pour placer les grilles d'ouvertures extérieures nécessaires à la décharge. En outre, même s'il était possible de dégager des emplacements de positionnement de telles grilles de décharge, un autre inconvénient serait à craindre. En effet, l'écoulement primaire (flèches 190) contient souvent des débris tels que des glaçons. S'ils se retrouvent dans l'écoulement de décharge (flèches 194), ces débris sont susceptibles de détériorer les aubages redresseurs disposés entre les bras supports, car ces aubages redresseurs sont généralement réalisés en matériau composite ou en aluminium.

L'invention à pour but de remédier aux inconvénients ci-dessus exposés. Elle propose un dispositif de décharge permettant d'effectuer une dérivation ou décharge d'air de la veine primaire vers la veine secondaire, et qui soit adaptée à une conception de turboréacteurs dans laquelle les aubages redresseurs sont positionnés sur la même section que les bras supports.

C'est ainsi que l'invention se rapporte à un turboréacteur ayant une veine d'écoulement primaire et une veine d'écoulement secondaire entre lesquelles se trouve un compartiment interveine avec une enveloppe intérieure le séparant de ladite veine primaire et une enveloppe extérieure le séparant de ladite veine secondaire, un carter intermédiaire doté d'une paroi amont et d'une paroi aval,
des ouvertures intérieures de l'enveloppe intérieure étant positionnées en amont du carter intermédiaire,des ouvertures extérieures de l'enveloppe extérieure étant positionnées en aval du carter intermédiaire, un circuit de décharge reliant lesdites ouvertures intérieures audites ouvertures extérieures à travers le compartiment interveine,
des moyens d'obturation étant aptes à ouvrir et à fermer ledit circuit de décharge.

Des turboréacteurs présentant ces caractéristiques sont décrits dans les documents EP 1249618, EP 1308601 et EP 1531236.

Le turboréacteur conforme à l'invention est caractérisé par le fait que le circuit de décharge comporte :
des trous amont du carter intermédiaire,
des trous aval du carter intermédiaire,
un canal annulaire défini entre le carter intermédiaire, l'enveloppe extérieure
et une cloison de liaison, ladite cloison de liaison s'appuyant sur le carter intermédiaire
de manière à englober les trous aval de celui-ci dans ledit canal annulaire et s'appuyant sur l'enveloppe extérieure de manière à englober les ouvertures extérieures de celle-ci dans ledit canal annulaire.

Selon l'invention, les trous amont du carter intermédiaire sont ménagés à travers d'une paroi amont de celui-ci, et les trous aval du carter intermédiaire sont ménagés à travers d'une paroi aval de celui-ci.

Selon l'invention le dispositif de décharge comporte un collecteur, disposé en amont du carter intermédiaire et comportant des passages de décharge mettant en communication les ouvertures intérieures de l'enveloppe intérieure et les trous amont du carter intermédiaire.

Selon une variante optionnelle de réalisation, le circuit de décharge comporte autant de trous amont que de trous aval, et il comporte, en outre, des tubes de guidage installés entre la paroi amont et la paroi aval du carter intermédiaire, chaque tube de guidage reliant un trou amont avec un trou aval en regard.

Les moyens d'obturation comportent un anneau de décharge doté de lumières de décharge et disposé en amont du carter intermédiaire. Ledit anneau de décharge est apte à se déplacer en rotation axiale entre une position d'ouverture du circuit de décharge dans laquelle lesdites lumières de décharge coïncident au moins partiellement avec des passages du circuit de décharge, et une position de fermeture du circuit de décharge dans laquelle lesdites lumières de décharge ne coïncident pas du tout avec lesdits passages du circuit de décharge.

Dans la position d'ouverture complète du circuit de décharge, chaque lumière de décharge de l'anneau de décharge se superpose complètement avec un passage de décharge du collecteur. Dans une position d'ouverture partielle du circuit de décharge, chaque lumière de décharge de l'anneau de décharge se superpose partiellement avec un passage de décharge du collecteur. Dans la position de fermeture complète du circuit de décharge, aucune lumière de décharge de l'anneau de décharge ne se superpose avec une partie d'un passage de décharge du collecteur.

Les moyens d'obturation comportent des moyens d'actionnement dudit anneau de décharge pour commander un déplacement de celui-ci entre lesdites positions d'ouverture complète et de fermeture complète du circuit de décharge.

Les moyens d'actionnement comportent au moins une fente de guidage découpée dans la paroi amont du carter intermédiaire, suivant une direction circonférentielle.

Les moyens d'actionnement comportent au moins un axe de commande de l'anneau de décharge. La course de celui-ci est limitée par les extrémités de ladite fente de guidage.

Les moyens d'actionnement comportent au moins un vérin associé audit axe de commande et disposé à l'intérieur du compartiment interveine entre la paroi amont et la paroi aval du carter intermédiaire.

L'invention sera mieux comprise à la lecture de la description détaillée qui va suivre, d'un mode de réalisation particulier de l'invention, fourni à titre indicatif et nullement limitatif, et illustré au moyen des dessins annexés, dans lesquels :
- la figure 1 illustre, en coupe axiale, le dispositif de décharge selon l'invention ;
- la figure 2 est une vue en perspective du dispositif de décharge coupé selon un plan longitudinal ;
- la figure 3 est une autre vue en perspective, à plus grande échelle, du dispositif de décharge coupé selon un plan longitudinal, montrant plus particulièrement l'assemblage de l'anneau de décharge avec le collecteur ;
- la figure 4 est une vue en perspective avant de l'anneau de décharge ;
- la figure 5 est une vue en perspective arrière du collecteur ;
- les figures 6, 7 et 8 représentent en perspective avant, l'ensemble formé par le collecteur et l'anneau de décharge, lorsque le circuit de décharge est respectivement complètement ouvert, partiellement ouvert et complètement fermé ; et
- la figure 9 illustre est une vue en perspective montrant les moyens d'actionnement de l'anneau de décharge ; et
- la figure 10, déjà décrite, et une vue en coupe axiale d'un dispositif de décharge de la technique antérieure.

Dans tout ce qui suit, les termes « radial », « axial » et « circonférentiel » se réfèrent aux directions « radiale », « axiale » et « circonférentielle » du turboréacteur, et les termes « amont » et « aval » se réfèrent au sens d'écoulement des gaz dans le turboréacteur.

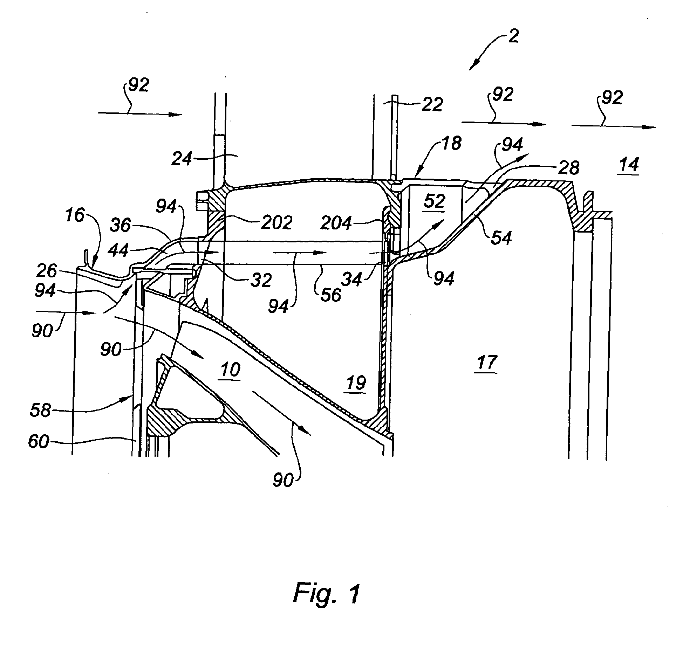

En se référant tout d'abord à la figure 1, il est représenté, en coupe axiale, une portion d'un turboréacteur 2 centrée sur une partie du carter intermédiaire 20, et montrant la veine primaire 10 dans laquelle circule l'écoulement primaire visualisé par les flèches 90 et la veine secondaire 14 dans laquelle circule l'écoulement secondaire visualisé par les flèches 92. Le carter intermédiaire comporte une paroi amont 202 et une paroi aval 204. Il comporte aussi des bras supports 22 qui s'étendent radialement dans la veine secondaire 14 à partir de l'enveloppe extérieure 18, et sont fixés à la paroi amont 202 et à la paroi aval 204. Il comporte également des aubages redresseurs 24 qui s'étendent radialement dans la veine secondaire 14 à partir de l'enveloppe extérieure 18. Ils sont répartis entre les bras supports 22 et sont fixés aux parois amont 202 et aval 204 du carter intermédiaire 20. Entre la veine primaire 10 et la veine secondaire 14 se trouve un compartiment interveine 17 qui est séparé de la veine primaire par une enveloppe intérieure 16 et de la veine secondaire par une enveloppe extérieure 18. En particulier, le compartiment interveine 17 comporte une portion intermédiaire dite cavité interveine 19 délimitée par l'enveloppe extérieure 18, l'enveloppe intérieure 16, la paroi amont 202 du carter intermédiaire 20 et la paroi aval 204 du carter intermédiaire 20.

L'écoulement de décharge de la veine primaire 10 vers la veine secondaire 14 est identifié par les flèches 94. Il sort de la veine primaire 10 à travers des ouvertures intérieures 26 de l'enveloppe intérieure 16 et pénètre dans la veine secondaire 14 à travers des ouvertures extérieures 28 de l'enveloppe extérieure 18. Il traverse des trous amont 32 de la paroi amont 202 et des trous aval 34 de la paroi aval 204.

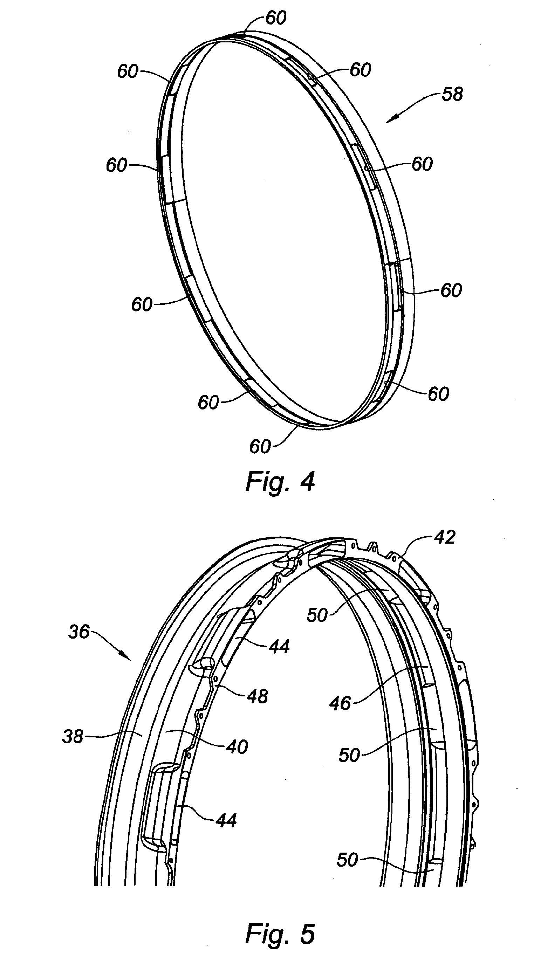

Entre les ouvertures intérieures 26 et les trous amont 32 du carter intermédiaire 20, l'écoulement de décharge 94 est guidé par un collecteur 36. Ce collecteur 36 est représenté en perspective arrière à la figure 5. C'est une pièce annulaire ayant une zone amont 38 et une zone aval 40. La zone amont 38 est une zone annulaire qui s'étend dans le prolongement de l'enveloppe intérieure 16. La zone aval 40 comporte une bride de fixation 42 pour sa fixation sur la paroi amont 202 du carter intermédiaire 20. Le collecteur 36 comporte, sur sa zone aval 40, des passages de décharge 44 en nombre identique au nombre de trous amont 32 de la paroi amont 202. Sur l'exemple illustré, les passages de décharge 44 sont au nombre de dix. Ils s'étendent d'une face interne 46 à une face aval 48 de la zone aval 40, ladite face aval 48 étant la face de contact entre la bride de fixation 42 et le carter intermédiaire 20 lorsque le collecteur 36 est fixé à celui-ci. Ils s'ouvrent sur ladite face interne 46 par des orifices internes 50.

Entre les trous aval 34 du carter intermédiaire 20 et les ouvertures extérieures 28, l'écoulement de décharge 94 est guidé par un canal annulaire 52. Celui-ci est délimité par la paroi aval 204 du carter intermédiaire 20, l'enveloppe extérieure 18 en aval du carter intermédiaire 20, et une cloison de liaison 54 qui relie ladite enveloppe extérieure 18 à ladite paroi aval 204 de manière à englober les ouvertures extérieures 28 et les trous aval 34 dans ledit canal annulaire 52.

Selon une variante de réalisation optionnelle, qui est illustrée aux figures, l'écoulement de décharge 94 est guidé, entre les trous amont 32 et les trous aval 34 du carter intermédiaire 20, par des tubes de guidage 56 qui s'étendent sensiblement suivant une direction axiale à travers la cavité interveine 19 du compartiment interveine 17 située entre les parois amont 202 et aval 204 du carter intermédiaire 20. Lorsque les tubes de guidage 56 sont prévus, il est prévu de préférence le même nombre de trous amont 32 et de trous aval 34. Sur l'exemple illustré, ils sont au nombre de dix. Ces tubes de guidage 56 présentent l'avantage de guider complètement l'écoulement de décharge 194, qui sinon remplirait la cavité interveine 19 du compartiment interveine 17 entre les parois amont 202 et aval 204 du carter intermédiaire 20, avec le risque de déposer dans cette cavité interveine 19 des débris comme par exemple des fragments de glace ou du sable.

Le collecteur 36, les trous amont 32, les trous aval 34, le canal annulaire 52 et les tubes de guidage 56, quand ils sont présents, définissent un circuit de décharge 36, 32, 56, 34, 52 entre les ouvertures intérieures 26 de l'enveloppe intérieure 16 et les ouvertures extérieures 28 de l'enveloppe extérieure 18.

Le dispositif de décharge selon l'invention comporte lesdites ouvertures intérieures 26, lesdites ouvertures extérieures 28 et ledit circuit de décharge. Il comporte également des moyens d'obturation 58, 60, 62, 64, 66 dudit circuit de décharge.

Ces moyens d'obturation 58, 60, 62, 64, 66 comportent un anneau de décharge 58, représenté en perspective avant à la figure 4. Cet anneau de décharge 58 comporte des lumières de décharge 60 dont le nombre, la forme et les dimensions correspondent au nombre, à la forme et aux dimensions des orifices internes 50 du collecteur 36. Elles sont au nombre de dix sur l'exemple illustré.

En service, l'anneau de décharge 58 est centré sur la face interne 46 du collecteur 36 de façon à pouvoir tourner par rapport à celui-ci entre deux positions extrêmes. Plus précisément, l'anneau de décharge 58 est monté contre la face interne 46 de la zone aval 40 du collecteur 36, et est guidé en rotation par cette face interne 46.

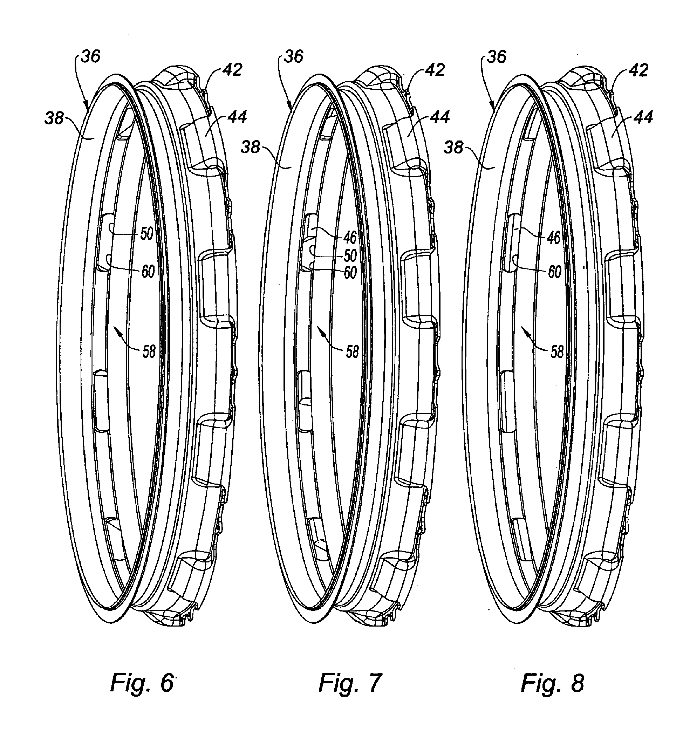

Les positions extrêmes, ainsi qu'une position intermédiaire d'ouverture partielle, sont illustrées aux figures 6 à 8. Ainsi :
- la figure 6 est une vue en perspective de l'anneau de décharge 58 assemblé avec le collecteur 36 dans la position d'ouverture complète du circuit de décharge, dans laquelle l'anneau de décharge 58 est tourné de telle manière que ses lumières de décharge 60 se superposent exactement avec les orifices internes 50 des passages de décharge 44 du collecteur 36 ;
- la figure 7 est une vue en perspective de l'anneau de décharge 58 assemblé avec le collecteur 36 dans une position d'ouverture partielle - ou de fermeture partielle - du circuit de décharge, dans laquelle l'anneau de décharge 58 est tourné de telle manière que ses lumières de décharge 60 obturent partiellement les orifices internes 50 des passages de décharge 44 du collecteur 36 et recouvrent partiellement la face interne 46 de celui-ci ;
- la figure 8 est une vue en perspective de l'anneau de décharge 58 assemblé avec le collecteur 36 dans la position de fermeture complète du circuit de décharge, dans laquelle l'anneau de décharge 58 est tourné de telle manière que ses lumières de décharge 60 ne se superposent pas avec les orifices internes 50 des passages de décharge 44 du collecteur 36, mais avec la face interne 46 de celui-ci.

Les moyens d'obturation 58, 60, 62, 64, 66 comportent aussi des moyens d'actionnement 62, 64, 66 de l'anneau de décharge 58, qui sont illustrés sur la figure 9.

Sur l'exemple de réalisation illustré aux figures, l'anneau de décharge 58 est doté d'au moins un axe de commande 62 qui s'étend suivant une direction sensiblement axiale à partir de l'anneau de décharge 58. De préférence, l'anneau de décharge 58 est doté de deux axes de commande 62. De tels axes de commande 62 sont disposés entre les lumières 60 de l'anneau de décharge 58. Chaque axe de commande 62 est raccordé à un vérin 64 qui est disposé soit dans la cavité interveine 19 entre la paroi amont 202 et la paroi aval 204 du carter intermédiaire 20, soit dans le compartiment interveine 17. A cet effet, chaque axe de commande 62 passe à travers la paroi amont 202 du carter intermédiaire 20. Plus précisément, chaque axe de commande 62 passe à travers une lumière de guidage 66 découpée dans cette paroi amont 202, entre deux trous amont 32. Les extrémités de chaque lumière de guidage 66 ont une fonction de butée pour l'axe de commande 62 qui la traverse. La course de l'axe de commande 62 est limitée par les extrémités de la lumière de guidage 66. Celle-ci est dimensionnée de façon appropriée de telle manière que la course de l'axe de commande 62 permette à l'anneau de décharge 58 de se déplacer entre les deux positions extrêmes souhaitées du circuit de décharge. Ainsi, l'une des butées de l'axe de commande 62 correspond à la position d'ouverture complète de l'anneau de décharge 58, tandis que l'autre butée de l'axe de commande correspond à la position de fermeture complète de l'anneau de décharge 58.

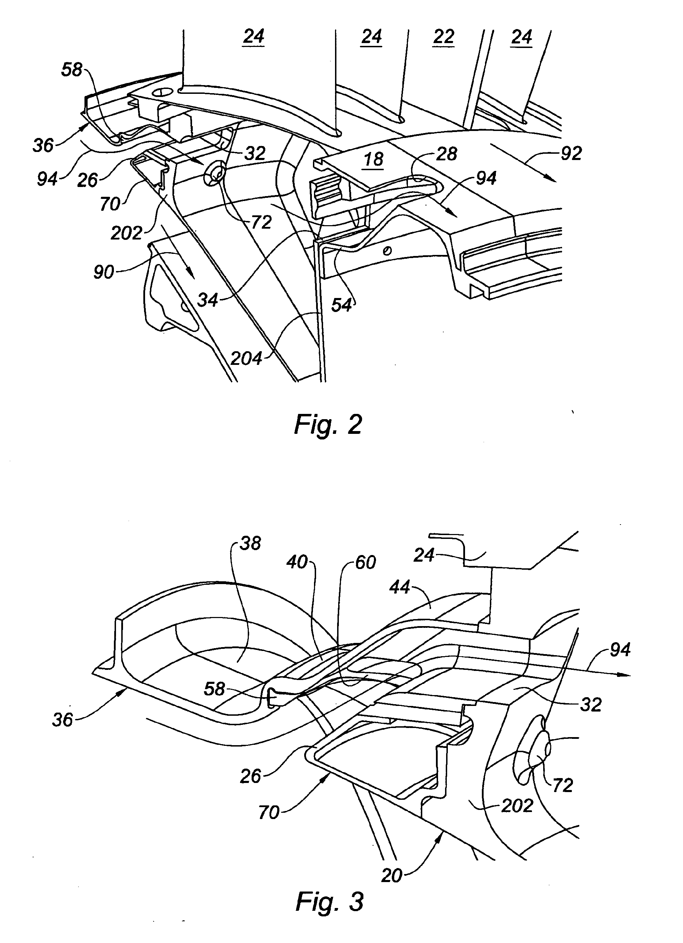

La figure 3 est une vue en perspective et en coupe à travers le circuit de décharge. Elle représente le collecteur 36 fixé sur la paroi amont 202 du carter intermédiaire 20 ainsi que l'anneau de décharge 58 et le collecteur 36 assemblés en position d'ouverture totale du circuit de décharge. Elle montre, en coupe, une ouverture intérieure 26, un passage de décharge 44 et un trou amont 32. Sur cette figure, il apparaît que l'enveloppe intérieure 16 du compartiment interveine 17 est matérialisé, à ce niveau du turboréacteur, par la zone amont 38 du collecteur 36, puis par un béquet 70, puis par le carter intermédiaire 20. Le béquet 70 est une pièce annulaire de liaison fixée à la paroi amont 202 du carter intermédiaire 20 par des moyens de fixation 72, par exemple des vis, et sur laquelle se centre l'anneau de décharge 58. Pour des raisons de simplification, les tubes de guidage 56 ne sont pas représentés à la figure 3.

La figure 2 est une autre vue en perspective, plus éloignée, et en coupe à travers le circuit de décharge. Elle représente le collecteur 36 fixé sur la paroi amont 202 du carter intermédiaire 20. Cette figure montre aussi, en coupe, un trou aval 34 de la paroi aval 204 du carter intermédiaire 20 et une ouverture extérieure 26 de l'enveloppe extérieure 18, ainsi que le canal annulaire 52. Celui-ci est délimité par l'enveloppe extérieure 18, la paroi aval 204 du carter intermédiaire 20 et une cloison de liaison 54. En outre, la figure 2 montre des aubages redresseurs 24 et un bras support 22, fixés sur les parois amont 202 et aval 204 du carter intérieur 20. Pour des raisons de simplification, les tubes de guidage 56 ne sont pas représentés à la figure 2.

## Revendications

1. Turboréacteur (2) ayant une veine d'écoulement primaire (10) et une veine d'écoulement secondaire (14) entre lesquelles se trouve un compartiment interveine (17) avec une enveloppe intérieure (16) le séparant de ladite veine primaire (10) et une enveloppe extérieure (18) le séparant de ladite veine secondaire (14), un carter intermédiaire (20) doté d'une paroi amont (202) et d'une paroi aval (204),
des ouvertures intérieures (26) de l'enveloppe intérieure (16) étant positionnées en amont du carter intermédiaire (20),
des ouvertures extérieures (28) de l'enveloppe extérieure (18) étant positionnées en aval du carter intermédiaire (20),
un circuit de décharge (32, 34, 36, 52, 56) reliant lesdites ouvertures intérieures (26) audites ouvertures extérieures (28) à travers le compartiment interveine (17), et
des moyens d'obturation (58, 60, 62, 64, 66) étant aptes à ouvrir et à fermer ledit circuit de décharge (32, 34, 36, 52, 56)
**caractérisé par le fait que** le circuit de décharge (32, 34, 36, 52, 56) comporte des trous amont (32) du carter intermédiaire (20), des trous aval (34) du carter intermédiaire (20), un canal annulaire (52) défini entre le carter intermédiaire (20), l'enveloppe extérieure (18) et une cloison de liaison (54), ladite cloison de liaison (54) s'appuyant sur le carter intermédiaire (20) de manière à englober les trous aval (34) de celui-ci dans ledit canal annulaire (52) et s'appuyant sur l'enveloppe extérieure (18) de manière à englober les ouvertures extérieures (28) de celle-ci dans ledit canal annulaire (52).

2. Turboréacteur selon la revendication 1, dont les trous amont (32) du carter intermédiaire (20) sont ménagés à travers une paroi amont (202) de celui-ci, et les trous aval (34) du carter intermédiaire (20) sont ménagés à travers une paroi aval (204) de celui-ci.

3. Turboréacteur selon la revendication 1, dont ledit circuit de décharge (32, 34, 36, 52, 56) comporte autant de trous amont (32) que de trous aval (34), et en ce qu'il comporte, en outre, des tubes de guidage (56) installés entre la paroi amont (202) et la paroi aval (204) du carter intermédiaire (20), chaque tube de guidage (56) reliant un trou amont (32) avec un trou aval (34) en regard.

4. Turboréacteur selon l'une quelconque des revendications 1 à 3, dont ledit circuit de décharge (32, 34, 36, 52, 56) comporte un collecteur (36), disposé en amont du carter intermédiaire (20) et comportant des passages de décharge (44) mettant en communication les ouvertures intérieures (26) de l'enveloppe intérieure (16) et les trous amont (32) du carter intermédiaire (20).

5. Turboréacteur selon l'une quelconque des revendications 1 à 4, dont lesdits moyens d'obturation (58, 60, 62, 64, 66) comportent un anneau de décharge (58) doté de lumières de décharge (60) et disposé en amont du carter intermédiaire (20), et en ce que ledit anneau de décharge (58) est apte à se déplacer en rotation axiale entre une position d'ouverture du circuit de décharge dans laquelle lesdites lumières de décharge (60) coïncident au moins partiellement avec des passages (44) du circuit de décharge, et une position de fermeture du circuit de décharge dans laquelle lesdites lumières de décharge (60) ne coïncident pas du tout avec lesdits passages (44) du circuit de décharge.

6. Turboréacteur selon la revendication 5, dont, dans la position d'ouverture complète du circuit de décharge, chaque lumière de décharge (60) de l'anneau de décharge (56) se superpose complètement avec un passage de décharge (44) du collecteur (36).

7. Turboréacteur selon la revendication 5, dont, dans une position d'ouverture partielle du circuit de décharge, chaque lumière de décharge (60) de l'anneau de décharge (58) se superpose partiellement avec un passage de décharge (44) du collecteur (36).

8. Turboréacteur selon la revendication 5, dont, dans la position de fermeture complète du circuit de décharge, aucune lumière de décharge (60) de l'anneau de décharge (58) ne se superpose avec une partie d'un passage de décharge (44) du collecteur (36).

9. Turboréacteur selon l'une quelconque des revendications 5 à 8, dont lesdits moyens d'obturation (58, 60, 62, 64, 66) comportent des moyens d'actionnement (62, 64, 66) dudit anneau de décharge (58) pour commander un déplacement de celui-ci entre lesdites positions d'ouverture complète et de fermeture complète du circuit de décharge.

10. Turboréacteur selon la revendication 9, dont lesdits moyens d'actionnement (62, 64, 66) comportent au moins une lumière de guidage (66) découpée dans la paroi amont (202) du carter intermédiaire (20), suivant une direction circonférentielle.

11. Turboréacteur selon la revendication 9 ou 10, dont lesdits moyens d'actionnement (62, 64, 66) comportent au moins un axe de commande (64) de l'anneau de décharge (58).

12. Turboréacteur selon la revendication 10, dont la course dudit axe de commande (62) est limitée par les extrémités de ladite lumière de guidage (66).

13. Turboréacteur selon la revendication 11 ou 12, dont lesdits moyens d'actionnement (62, 64, 66) comportent au moins un vérin (64) associé audit axe de commande (62) et disposé à l'intérieur du compartiment interveine (17) entre la paroi amont (202) et la paroi aval (204) du carter intermédiaire (20).

## Claims

1. A jet engine (2) having a primary flow stream (10) and a secondary flow stream (14) having an inter-stream compartment (17) therebetween with an inner envelope (16) separating it from said primary stream (10) and an outer envelope (18) separating it from said secondary stream (14),
an intermediate casing (20) provided with an upstream wall (202) and a downstream wall (204),
inner openings (26) of the inner envelope (16) being located upstream from the intermediate casing (20),
outer openings (28) of the outer envelope (18) being located downstream from the intermediate casing (20),
a discharge circuit (32, 34, 36, 52, 56) connecting said inner openings (26) to said outer openings (28) through the inter-stream compartment (17), and
plugging means (58, 60, 62, 64, 66) capable of opening and closing said discharge circuit (32, 34, 36, 52, 56),
**characterised in that** the discharge circuit (32, 34, 36, 52, 56) comprises upstream holes (32) of the intermediate casing (20), downstream holes (34) of the intermediate casing (20), a ring channel (52) provided between the intermediate casing (20), the outer envelope (18) and a connecting partition wall (54), said connecting partition wall (54) bearing against the intermediate casing (20) so as to enclose downstream holes (34) thereof in said ring channel (52) and bearing against the outer envelope (18) so as to enclose the outer openings (28) thereof in said ring channel (52).

2. The jet engine according to claim 1, wherein the upstream holes (32) of the intermediate casing (20) are provided through an upstream wall (202) thereof, and downstream holes (34) of the intermediate casing (20) are provided through a downstream wall (204) thereof.

3. The jet engine according to claim 1, wherein said discharge circuit (32, 34, 36, 52, 56) comprises as many upstream holes (32) as downstream holes (34), and wherein it further comprises guide tubes (56) located between the upstream wall (202) and the downstream wall (204) of the intermediate casing (20), each guide tube (56) connecting an upstream hole (32) to downstream hole (34) facing it.

4. The jet engine according to any of claims 1 to 3, wherein said discharge circuit (32, 34, 36, 52, 56) comprises a manifold (36), provided upstream from the intermediate casing (20) and comprising discharge passageways (44) communicating inner openings (26) of the inner envelope (16) with downstream holes (32) of the intermediate casing (20).

5. The jet engine according to any of claims 1 to 4, wherein said plugging means (58, 60, 62, 64, 66) comprise a discharge ring (58) provided with discharge ports (60) and placed upstream from the intermediate casing (20), and wherein said discharge ring (58) is able to axially rotatably move between an open position of the discharge circuit wherein said discharge ports (60) at least partly coincide with passageways (44) of the discharge circuit, and a close position of the discharge circuit wherein said discharge ports (60) do not coincide with said passageways (44) of the discharge circuit at all.

6. The jet engine according to claim 5, wherein, in the fully open position of the discharge circuit, each discharge port (60) of the discharge ring (56) is fully superimposed with a discharge passageway (44) of the manifold (36).

7. The jet engine according to claim 5, wherein, in a partly open position of the discharge circuit, each discharge port (60) of the discharge ring (58) is partly superimposed with a discharge passageway (44) of the manifold (36).

8. The jet engine according to claim 5, wherein, in the fully close position of the discharge circuit, no discharge port (60) of the discharge ring (58) is superimposed with a portion of the discharge passageway (44) of the manifold (36).

9. The jet engine according to any of claims 5 to 8, wherein said plugging means (58, 60, 62, 64, 66) comprise means (62, 64, 66) for actuating said discharge ring (58) for controlling a movement thereof between said fully open and fully close positions of the discharge circuit.

10. The jet engine according to claim 9, wherein said actuating means (62, 64, 66) comprise at least one guide port (66) cut off in an upstream wall (202) of the intermediate casing (20), along a circumferential direction.

11. The jet engine according to claim 9 or 10, wherein said actuating means (62, 64, 66) comprise at least one control axis (64) of the discharge ring (58).

12. The jet engine according to claim 10, wherein the stroke of said control axis (62) is restricted by the ends of said guide port (66).

13. The jet engine according to claim 11 or 12, wherein said actuating means (62, 64, 66) comprise at least one jack (64) combined with said control axis (62) and placed within inter-stream compartment (17) between upstream wall (202) and downstream wall (204) of the intermediate casing (20).

## Patentansprüche

1. Turboluftstrahltriebwerk (2) mit einem Hauptströmungsstrahl (10) und einem Nebenströmungsstrahl (14), zwischen denen sich ein Zwischenstrahlabteil (17) mit einer Innenhülle (16), welche dieses von dem Hauptstrahl (10) trennt, und einer Außenhülle (18), welche dieses von dem Nebenstrahl (14) trennt, befindet,
einem Zwischengehäuse (20), das mit einer vorgelagerten Wand (202) und einer nachgelagerten Wand (204) versehen ist,
wobei Innenöffnungen (26) der Innenhülle (16) oberhalb des Zwischengehäuses (20) positioniert sind,
wobei Außenöffnungen (28) der Außenhülle (18) unterhalb des Zwischengehäuses (20) positioniert sind,
einem Ausströmkreis (32, 34, 36, 52, 56), der die Innenöffnungen (26) mit den Außenöffnungen (28) durch das Zwischenstrahlabteil (17) verbindet, und
wobei Abschlussmittel (58, 60, 62, 64, 66) dazu geeignet sind, den Ausströmkreis (32, 34, 36, 52, 56) zu öffnen und zu schließen,
**dadurch gekennzeichnet, dass** der Ausströmkreis (32, 34, 36, 52, 56) vorgelagerte Löcher (32) des Zwischengehäuses (20), nachgelagerte Löcher (34) des Zwischengehäuses (20), einen ringförmigen Kanal (52), der zwischen dem Zwischengehäuse (20), der Außenhülle (18) und einer Verbindungswand (54) definiert ist, umfasst, wobei die Verbindungswand (54) sich auf dem Zwischengehäuse (20) abstützt, um die nachgelagerten Löcher (34) desselben in dem ringförmigen Kanal (52) mit einzubeziehen, und sich auf der Außenhülle (18) abstützt, um die Außenöffnungen desselben in dem ringförmigen Kanal (52) mit einzubeziehen.

2. Turboluftstrahltriebwerk nach Anspruch 1, wobei die vorgelagerten Löcher (32) des Zwischengehäuses (20) durch eine vorgelagerte Wand (202) desselben hindurch eingerichtet sind, und die nachgelagerten Löcher (34) des Zwischengehäuses (20) durch eine nachgelagerte Wand (204) desselben hindurch eingerichtet sind.

3. Turboluftstrahltriebwerk nach Anspruch 1, wobei der Ausströmkreis (32, 34, 36, 52, 56) ebenso viele vorgelagerte Löcher (32) wie nachgelagerte Löcher (34) umfasst, und ferner Führungsröhren (56) umfasst, die zwischen der vorgelagerten Wand (202) und der nachgelagerten Wand (204) des Zwischengehäuses (20) installiert sind,
wobei jede Führungsröhre (56) ein vorgelagertes Loch (32) mit einem gegenüberliegenden nachgelagerten Loch (34) verbindet.

4. Turboluftstrahltriebwerk nach einem der Ansprüche 1 bis 3, dessen Ausströmkreis (32, 34, 36, 52, 56) eine Ladeleitung (36) umfasst, die oberhalb des Zwischengehäuses (20) angeordnet ist und Ausströmdurchgänge (44) umfasst, welche die inneren Öffnungen (26) der Innenhülle (16) und die vorgelagerten Löcher (32) des Zwischengehäuses (20) in Verbindung setzen.

5. Turboluftstrahltriebwerk nach einem der Ansprüche 1 bis 4, dessen Abschlussmittel (58, 60, 62, 64, 66) einen Ausströmring (58) umfassen, der mit Ausströmschlitzen (60) versehen ist und oberhalb des Zwischengehäuses (20) angeordnet ist, und dass der Ausströmring (58) in der Lage ist, sich in einer Axialdrehung zwischen einer Öffnungsposition des Ausströmkreises, in der die Ausströmschlitze (60) mindestens teilweise mit den Durchgängen (44) des Ausströmkreises zusammenfallen, und einer Verschlussposition des Ausströmkreises, in der die Ausströmschlitze (60) gar nicht mit den Durchgängen (44) des Ausströmkreises zusammenfallen, zu bewegen.

6. Turboluftstrahltriebwerk nach Anspruch 5, wobei in der vollständigen Öffnungsposition des Ausströmkreises jeder Ausströmschlitz (60) des Ausströmrings (56) sich vollständig mit einem Ausströmdurchgang (44) der Ladeleitung (36) überlagert.

7. Turboluftstrahltriebwerk nach Anspruch 5, wobei in einer teilweisen Öffnungsposition des Ausströmkreises jeder Ausströmschlitz (60) des Ausströmrings (58) sich teilweise mit einem Ausströmdurchgang (44) der Ladeleitung (36) überlagert.

8. Turboluftstrahltriebwerk nach Anspruch 5, wobei in einer vollständigen Verschlussposition des Ausströmkreises kein Ausströmschlitz (60) des Ausströmrings (58) sich mit einem Teil eines Ausströmdurchgangs (44) der Ladeleitung (36) überlagert.

9. Turboluftstrahltriebwerk nach einem der Ansprüche 5 bis 8, wobei die Abschlussmittel (58, 60, 62, 64, 66) Betätigungsmittel (62, 64, 66) des Ausströmrings (58) umfassen, um eine Bewegung desselben zwischen den vollständig geöffneten und vollständig geschlossenen Positionen des Ausströmkreises zu steuern.

10. Turboluftstrahltriebwerk nach Anspruch 9, wobei die Betätigungsmittel (63, 64, 66) mindestens einen Führungsschlitz (66) umfassen, der in der vorgelagerten Wand (202) des Zwischengehäuses (20) in Umfangsrichtung ausgeschnitten ist,

11. Turboluftstrahltriebwerk nach Anspruch 9 oder 10,
wobei die Betätigungsmittel (62, 64, 66) mindestens eine Achse (64) zum Steuern des Ausströmrings (58) umfassen.

12. Turboluftstrahltriebwerk nach Anspruch 10, wobei der Weg der Steuerachse (62) durch die Enden des Führungsschlitzes (66) begrenzt ist.

13. Turboluftstrahltriebwerk nach Anspruch 11 oder 12,
wobei die Betätigungsmittel (62, 64, 66) mindestens einen Zylinder (64) umfassen, der mit der Steuerachse (62) verbunden ist und im Innern des Zwischenstrahlabteils (17) zwischen der vorgelagerten Wand (202) und der nachgelagerten Wand (204) des Zwischengehäuses (20) angeordnet ist.
